# EUROPÄISCHE PATENTSCHRIFT

(11) **EP 3 586 698 B1**
(45) Veröffentlichungstag und Bekanntmachung des Hinweises auf die Patenterteilung: **28.07.2021**
(21) Anmeldenummer: 19179574.9
(22) Anmeldetag: 12.06.2019
(51) Int. Cl.: A47J 37/06

(54) **ELEKTRISCHES BACK- ODER GRILLGERÄT**
ELECTRIC COOKING OR GRILLING DEVICE
APPAREIL ÉLECTRIQUE DE CUISSON OU DE GRILLADE

(30) Priorität: 22.06.2018 DE 102018115090
(43) Veröffentlichungstag der Anmeldung: 01.01.2020
(73) Patentinhaber: Ernst Neumärker GmbH & Co. KG, 58675 Hemer (DE)
(72) Erfinder: Hellwinkel, Robin, 58675 Hemer (DE)
(74) Vertreter: Köchling, Conrad-Joachim

(56) Entgegenhaltungen:
- CN-U- 201 595 702
- DE-A1-102014 227 046
- JP-A- 2011 174 602
- US-A1- 2004 182 252
- US-A1- 2011 132 895
- US-A1- 2015 164 274

## Beschreibung

Die Erfindung betrifft ein elektrisches Back- oder Grillgerät, wie beispielsweise ein Kontaktgrill oder ein Waffeleisen, zumindest aufweisend ein Gehäuse und eine im Gehäuse angeordnete elektrische Heizung mit einer Kontaktfläche oder zwei in eine parallele, einander angenäherte Lage verschwenkbare elektrisch beheizbare Kontaktflächen, wobei je ein haubenartiges Gehäuseteil die jeweilige Rückseite der beheizbaren Kontaktfläche und die dort angeordnete Heizung abdeckt oder umgibt, wobei jedes haubenartige Gehäuseteil aus Metall besteht, wobei das jeweilige haubenartige Gehäuseteil doppelwandig ausgebildet ist, wobei die beiden Wände jeweils voneinander beabstandet sind und zwischen den beabstandeten Wänden ein Hohlraum ausgebildet ist

Derartige elektrische Back- oder Grillgeräte sind im Stand der Technik vielfach bekannt und sowohl bei privaten wie auch bei gewerblichen Anwendern äußerst weit verbreitet.

Derartige Back- oder Grillgeräte weisen zur Erwärmung der jeweiligen Kontaktfläche jeweils eine Heizung auf, die die Kontaktfläche erwärmt und die dabei von einem Gehäuse umgeben ist.

Die Leistung der jeweiligen Heizung ist dabei derart begrenzt, dass das Gehäuse keine übermäßige Erwärmung erfahren darf, sodass bei einem Kontakt des Gehäuses von außen durch einen Benutzer dieser keine Verbrennung erleidet.

In der Vergangenheit wurden insbesondere bei Geräten für den professionellen Bedarf zum Teil massive Gehäuseteile aus Metall verwendet, um dem Wärmeübertrag von der Heizung auf die Außenseite des Gehäuseteils so gering wie möglich zu halten.

Insbesondere bei vielen im Stand der Technik bekannten elektrischen Back- oder Grillgeräten mit einem Kunststoffgehäuse ist die Leistung der Heizung sehr begrenzt, da der Kunststoff keine zu hohe Erwärmung erfahren darf und ansonsten Schaden nehmen würde. Dies hat zur Folge, dass die Zubereitung entsprechender Speisen, wie beispielsweise Waffeln oder zu grillender Speisen eine deutlich höhere Zeitdauer erfordert.

Zudem könnten bei entsprechender Leistungserhöhung der Leistung bei bekannten Geräten auch die gemäß einer EU-Verordnung zulässigen maximalen Oberflächentemperaturen überschritten werden und diese Geräte somit nicht mehr zulässig sein.

Ein elektrisches Back- oder Grillgerät gattungsgemäßer Art ist beispielsweise aus der US 2011/0132895 A1 bekannt.

Aus der DE 10 2014 227 046 A1 ist ein Waffeleisen oder Kontaktgrill bekannt, bei dem eine Einrichtung zum aktiven Kühlen mindestens einer Gehäuseoberfläche vorgesehen ist.

Aus der US 2015/0164274 A1 ist ein weiteres Waffeleisen ähnlicher Art bekannt.

Zudem ist aus der CN 2015/95702 U ein elektrisch beheizter Ofen oder ein Grillgerät ähnlicher Art bekannt.

Die JP 2011 174602 A offenbart ein elektrisches Back- oder Grillgerät mit einem im Gehäuseinneren angeordneten Vakuum-Isolierelement.

Aufgrund des eingangs genannten Standes der Technik liegt der vorliegenden Erfindung die Aufgabe zugrunde, ein elektrisches Back- oder Grillgerät der eingangs genannten Art zu schaffen, bei dem mit gesteigerter Heizleistung und somit einer besonders kurzen Zubereitungsdauer der zu backenden oder grillenden Speisen eine nur geringe Oberflächentemperatur auf der Gehäuseaußenseite auftritt, die dabei gegebenenfalls optisch nach Wunsch des Gebrauchers gestaltbar ist und eine hohe Lebensdauer aufweist.

Zur Lösung dieser Aufgabe schlägt die Erfindung vor, dass das im Hohlraum zwischen den beabstandeten Wänden ein Vakuum gebildet ist.

Durch die doppelwandige Ausbildung der Wände des jeweiligen haubenartigen Gehäuseteils ist eine Wärmesperre gebildet, die die Bildung von hohen Oberflächentemperaturen an der Außenhaut, also der äußeren Wand des jeweiligen haubenartigen Gehäuseteils, wirksam verhindert. Die innere Wand der beiden Wände wird durch die Nähe zur von der Wand umgebenden Heizung deutlich stärker erwärmt als die äußere Wand der beiden Wände, da die beiden Wände voneinander beabstandet sind und zwischen den beabstandeten Wänden ein Hohlraum ausgebildet ist, der einen Temperaturübertrag von der inneren Wand zur äußeren Wand deutlich hemmt.

Mittels eines derartigen erfindungsgemäßen Back- oder Grillgerätes kann die Leistung der Heizung deutlich erhöht werden, ohne dass die Oberflächentemperatur der Außenwand, die die Außenhaut des Gehäuseteiles bildet, deutlich erhöht ist. Hierdurch ist zusätzlich die Zubereitungszeit der zu backenden oder zu grillenden Speisen deutlich verringert, sodass beispielsweise in der gleichen Zeit deutlich mehr Speisen zubereitet werden können.

Zudem sind durch eine derartige doppelwandige Ausbildung des jeweiligen haubenartigen Gehäuseteils trotz Leistungserhöhung der Heizung neueste EU-Vorschriften betreffend einer maximalen Oberflächentemperatur der Außenhaut des Gehäuses erfüllt.

Durch die Ausbildung eines Vakuums im Hohlraum zwischen den beabstandeten Wänden ist der Effekt der Wärmesperre nochmals deutlich erhöht. Dies bedeutet, dass bei ausgebildetem Vakuum im Hohlraum eine abermals gesteigerte Heizleistung zur Erwärmung der Kontaktflächen verwendet werden kann, ohne beim Betrieb die Temperatur der Außenhaut, das heißt der äußeren Wand der Doppelwand, maßgeblich zu erhöhen. Somit kann die Zubereitungszeit der zu backenden oder zu grillenden Speisen nochmals verkürzt werden und die Effektivität gesteigert werden.

Weiter kann besonders bevorzugt vorgesehen sein, dass das elektrische Back- oder Grillgerät einen Standfuß aufweist, der eine Steuerelektronik zur Temperatursteuerung und gegebenenfalls Betriebsdauer und weiterer betriebsrelevanter Parameter und eine optische Betriebsanzeige aufweist.

Das der Aufstandsebene zugewandte Gehäuseteil weist dabei einen an sich bekannten Standfuß auf, auf dem das Back- oder Grillgerät sicher auf einer Ebene abstellbar ist. Innerhalb des Standfußes kann dabei die zur Steuerung des Gerätes notwendige Steuerelektronik, wie beispielsweise zur Steuerung der Temperatur der Heizung und somit der Kontaktflächen oder der Betriebsdauer oder weiterer betriebsrelevanter Parameter angeordnet sein. Zur einfachen Erkennung durch einen Benutzer kann hier auch eine an sich bekannte optische Betriebsanzeige angeordnet sein, die den jeweiligen Betriebszustand anzeigt.

In an sich bekannter Art und Weise kann besonders bevorzugt vorgesehen sein, dass das elektrische Back- oder Grillgerät eine kreisrunde, eine ovale oder eine eckige Grundform aufweist.

Auch die Ausbildung einer kreisrunden, einer ovalen oder einer eckigen, wie beispielsweise einer rechteckigen oder quadratischen Grundform, ist an sich bekannt und kann je nach Einsatzzweck und zu erzielender Form der zuzubereitenden Speise Anwendung finden.

Auch kann besonders bevorzugt vorgesehen sein, dass die Gehäuseteile mittels eines Scharniergelenks verschwenkbar miteinander verbunden sind, wobei zudem Befestigungsmittel oder Kabeldurchführungen an den Gehäuseteilen ausgebildet oder angeordnet sind, wobei die beiden Wände der Doppelwand im Scharnierbereich oder im Bereich der Befestigungsmittel oder der Kabeldurchführungen aneinander anliegen.

Die Anordnung eines derartigen Scharniergelenks und derartiger Befestigungsmittel oder Kabeldurchführungen ist auch an sich bekannt, jedoch ist die Doppelwand im Bereich der Befestigung des Scharniers oder der Kabeldurchführung und gegebenenfalls weiterer Befestigungsmittel wie beispielsweise Schrauben nicht voneinander beabstandet, sondern die beiden Wände der Doppelwand sind in diesen Bereichen aneinander anliegend angeordnet. Hierdurch ist es sichergestellt, dass die Doppelwand insbesondere in diesen erwähnten Bereichen besonders hohe Stabilität aufweist, sodass eine Beschädigung in diesem Bereich vermieden und ein langlebiger Betrieb des jeweiligen elektrischen Back- oder Grillgerätes ermöglicht ist.

Darüber hinaus kann besonders bevorzugt vorgesehen sein, dass das jeweilige haubenartige Gehäuseteil aus Edelstahl besteht.

Die Ausbildung des jeweiligen haubenartigen Gehäuseteils aus Edelstahl stellt zum einen eine besonders langlebige, dabei ästhetische und zudem den entsprechenden Lebensmittelrichtlinien entsprechende Ausgestaltung dar.

Aufgrund der äußerst niedrigen Temperatur der Außenoberfläche der äußeren Wand 9 des jeweiligen haubenartigen Gehäuseteils 2a,2b ist es auch möglich, dieses aus Edelstahl bestehende Teil jeweils mit Kunststoff zu beschichten oder nach Wunsch zu lackieren.

Schließlich kann besonders bevorzugt vorgesehen sein, dass die erste Wand der Doppelwand oder die zweite Wand der Doppelwand oder beide Wände der Doppelwand an ihrer dem Hohlraum zugewandten Oberfläche eine Hitzeschutzbeschichtung, beispielsweise eine Thermofolie, aufweisen.

Die Anordnung einer derartigen Thermofolie an einer oder beiden Wänden der Doppelwand stellt eine zusätzliche Erhöhung der Effektivität der Wärmesperre dar. Hierdurch ist der Wärmeübergang zusätzlich gehemmt, sodass entweder eine niedrigere Temperatur der Außenhaut der Oberfläche der äußeren Wand bewirkt ist oder dass die Heizleistung zusätzlich gesteigert werden kann, um die Zubereitungszeit der zu backenden oder zu grillenden Speisen weiter zu verringern.

Ein Ausführungsbeispiel der Erfindung ist in den Figuren dargestellt und im Folgenden näher beschrieben.

Es zeigt:
- Figur 1: ein erfindungsgemäßes Waffeleisen in Draufsicht;
- Figur 2: den Schnitt BB der Figur 1;
- Figur 3: den Schnitt CC der Figur 1.

In den Figuren ist ein Waffeleisen 1 in Ansichten gezeigt. Alternativ und in den Figuren nicht gezeigt, kann sich die Erfindung auch auf ein elektrisches Back- oder Grillgerät, wie beispielsweise einen Kontaktgrill, beziehen.

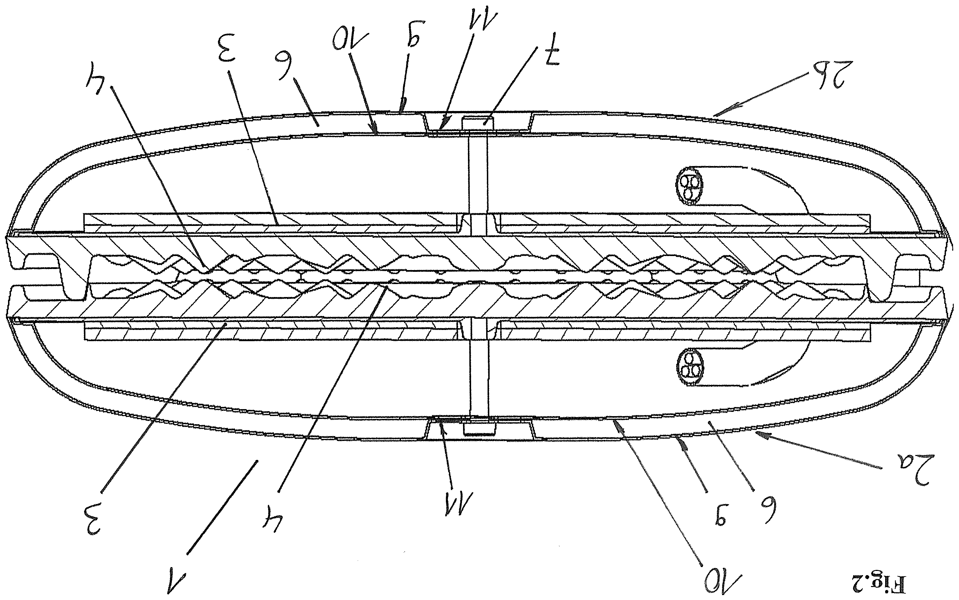

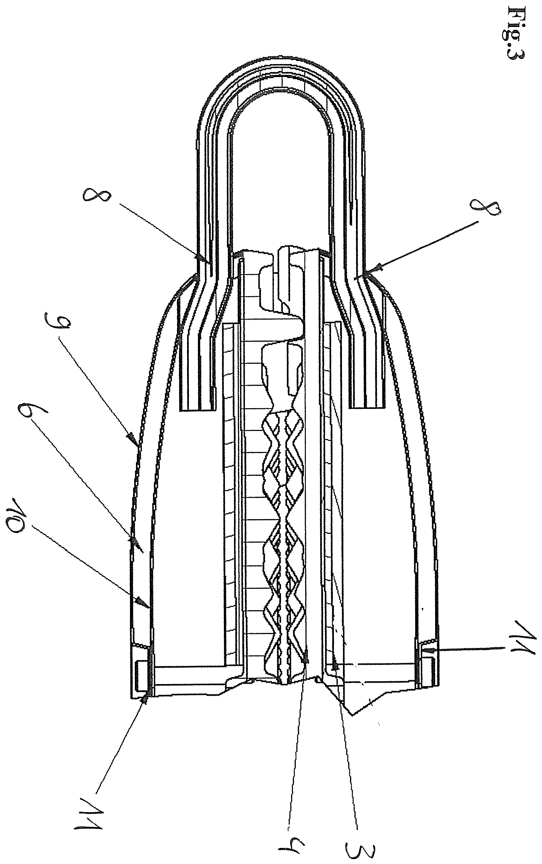

Das Waffeleisen 1 weist zumindest ein Gehäuse 2, bestehend aus den Gehäuseteilen 2a und 2b auf. Zudem weist das Waffeleisen 1 zur Erwärmung jeder Kontaktfläche 4 jeweils eine elektrische Heizung 3 auf. Wie insbesondere aus den Figuren 2 und 3 ersichtlich, sind die beheizbaren Kontaktflächen 4 in eine parallele, aneinander angenäherte Lage verschwenkbar. Zur Befüllung mit Speisen und Entnahme desselben sind diese auch in eine etwa rechtwinklig zueinander angeordnete Lage verschwenkbar.

Die Gehäuseteile 2,2a,2b sind jeweils etwa haubenartig ausgebildet und umgeben jeweils die Rückseite der beheizbaren Kontaktfläche 4 und die dort angeordnete Heizung 3 und decken diese ab. Hierdurch ist ein Benutzer vor Kontakt und gegebenenfalls entstehenden Verletzungen, wie eine Verbrennung, geschützt. Im Ausführungsbeispiel besteht jedes haubenartige Gehäuseteil 2a,2b aus Metall.

Erfindungsgemäß ist jedes haubenartige Gehäuseteil 2a,2b doppelwandig ausgebildet. Dabei sind die beiden Wände 9,10 jeweils voneinander beabstandet und zwischen den beabstandeten Wänden 9,10 ist jeweils ein Hohlraum 6 ausgebildet. Durch diesen Hohlraum 6 ist der Wärmeübertrag von der zweiten, inneren Wand 10 auf die erste, äußere Wand 9 deutlich gehemmt, da insbesondere durch den dort gebildeten Hohlraum 6 eine Wärmesperre gebildet ist. Somit kann die Heizleistung der Heizung 3 deutlich erhöht werden, ohne dabei die Temperatur der Außenhaut der Wand 9 zu erhöhen. Somit kann hierdurch die Anzahl beziehungsweise Menge an zuzubereitenden Speisen deutlich gegenüber eine geringere Temperatur aufweisenden elektrischen Back- oder Grillgeräten erhöht werden.

Zudem sind hierdurch entsprechende Wärmeschutzverordnungen, die eine maximale Temperatur an der Oberfläche der Außenhaut vorgeben, erfüllt, ohne dabei die Heizleistung verringern zu müssen.

Bei dem in den Figuren gezeigten Ausführungsbeispiel ist im Hohlraum 6 zwischen den beabstandeten Wänden 9,10 ein Vakuum gebildet, welches die Wirkung der Wärmesperre nochmals deutlich steigert. Dies bedeutet, dass bei ausgebildetem Vakuum im Hohlraum 6 der Wärmeübertrag von der inneren Wand 10 auf die äußere Wand 9 nochmals deutlich verringert ist, sodass die Leistung der Heizung 3 zur Erwärmung der Kontaktfläche 4 nochmals gesteigert werden kann, ohne dabei die Temperatur der Außenhaut, also der äußeren Oberfläche der Wand 9, zu steigern. Somit ist hierdurch die Effizienz eines derartigen Waffeleisens noch einmal gesteigert, da die Wärmeleistung zusätzlich erhöht ist und somit die Zubereitungszeit nochmals verringert ist.

Das erfindungsgemäße Waffeleisen 1 oder ein erfindungsgemäßes elektrisches Back- oder Grillgerät wie beispielsweise ein Kontaktgrill können dabei eine in einem Standfuß, der in den Figuren nicht gezeigt ist, angeordnete Steuerelektronik zur Temperatursteuerung und gegebenenfalls Steuerung der Betriebsdauer oder weiterer betriebsrelevanter Parameter aufweisen. Zudem kann hier auch eine dem Benutzer den Betrieb signalisierende optische Betriebsanzeige ausgebildet oder angeordnet sein. Hierdurch kann der Benutzer auf an sich bekannte Art und Weise Einfluss auf die Temperatur und somit die Zubereitungszeit nehmen und gleichzeitig mittels der Betriebsanzeige erkennen, ob das Gerät aktiviert ist beziehungsweise in welchem Betriebszustand sich das Gerät befindet.

Das Waffeleisen 1 weist im Ausführungsbeispiel eine etwa kreisrunde Form auf. Alternativ und in den Figuren nicht gezeigt, kann das Waffeleisen 1 oder das entsprechende erfindungsgemäße elektrische Back- oder Grillgerät wie beispielsweise ein Kontaktgrill auch eine ovale oder eckige wie rechteckige oder quadratische Grundform aufweisen.

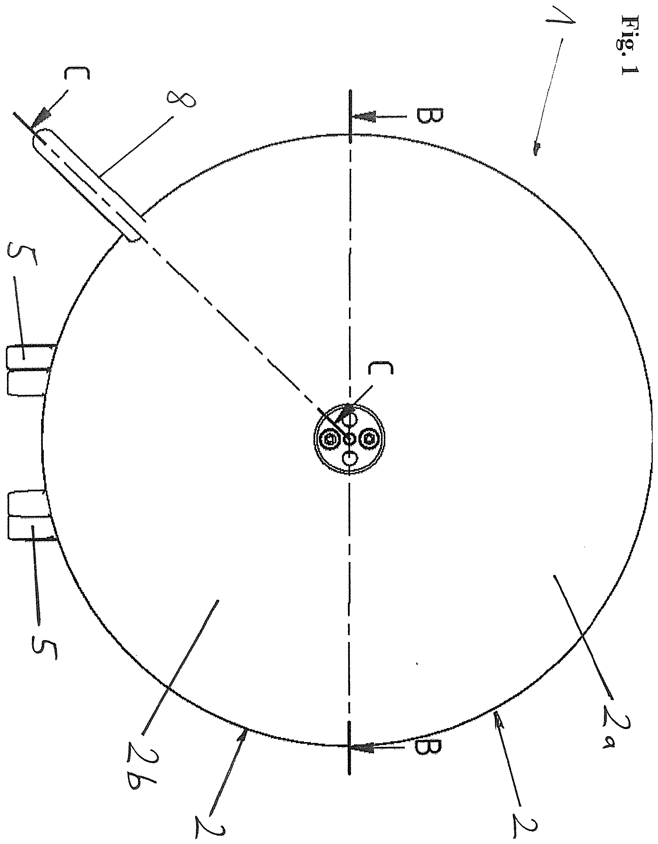

Wie insbesondere aus Figur 1 ersichtlich, sind die Gehäuseteile 2a,2b mittels eines Scharniergelenks 5 verschwenkbar miteinander verbunden. Zudem sind Befestigungsmittel 7 und mindestens eine Kabeldurchführung 8 an den Gehäuseteilen 2a,2b ausgebildet. Die beiden Wände 9,10 der Doppelwand jedes haubenartigen Gehäuseteils 2a,2b sind zur Erhöhung der Stabilität im Scharnierbereich oder im Bereich der Befestigungsmittel 7 oder der Kabeldurchführung 8 aneinander anliegend (bei 11) ausgebildet. Hierdurch ist die Stabilität des jeweiligen Gehäuseteils 2a,2b in diesen Bereichen jeweils deutlich erhöht, sodass eine besonders hohe Lebensdauer des Gerätes ermöglicht ist.

Die jeweiligen haubenartigen Gehäuseteile 2a,2b des Waffelweisen 1 bestehen im Ausführungsbeispiel aus Edelstahl.

Zur weiteren Steigerung der Effizienz der Wärmesperre kann an jeder Wand 9 oder 10 der Doppelwand oder nur an einer Wand 9 beziehungsweise 10 der Doppelwand, vorzugsweise an ihrer dem Hohlraum 6 zugewandten Oberfläche, eine Hitzeschutzbeschichtung ausgebildet sein. Diese kann beispielsweise aus einer auf die jeweilige Wandoberfläche aufgebrachte Thermofolie gebildet sein. Hierdurch erfolgt eine zusätzliche Absenkung der Oberflächentemperatur der äußeren Wand 9 bei gleicher Heizleistung der Heizung 3 oder es ist eine weitere Steigerung der Heizleistung der Heizung 3 und somit Erhöhung der Temperatur der Kontaktfläche 4 bei gleichbleibender Temperatur der Oberfläche der äußeren Wand 9 ermöglicht.

In diesem Falle wäre eine zusätzliche Zeitersparnis bei der Zubereitung von Speisen durch eine abermalige Erhöhung der Temperatur der Kontaktfläche 4 ermöglicht, ohne dabei die Temperatur der Außenhaut der äußeren Wand 9 des jeweiligen Gehäuseteils 2a oder 2b zu erhöhen.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichenliste

- 1: Waffeleisen
- 2: Gehäuse
- 2a: Gehäuseteil
- 2b: Gehäuseteil
- 3: Heizung
- 4: Kontaktfläche
- 5: Scharniergelenk
- 6: Hohlraum
- 7: Befestigungsmittel
- 8: Kabeldurchführung
- 9: Wand (außen)
- 10: Wand (innen)
- 11: aneinander anliegende Wände 9,10

## Patentansprüche

1. Elektrisches Back- oder Grillgerät, wie beispielsweise ein Kontaktgrill oder ein Waffeleisen (1), zumindest aufweisend ein Gehäuse (2) und eine im Gehäuse (2) angeordnete elektrische Heizung (3) mit einer Kontaktfläche (4) oder zwei in eine parallele, einander angenäherte Lage verschwenkbare elektrisch beheizbare Kontaktflächen (4), wobei je ein haubenartiges Gehäuseteil (2a,2b) die jeweilige Rückseite der beheizbaren Kontaktfläche (4) und die dort angeordnete Heizung (3) abdeckt oder umgibt, wobei jedes haubenartige Gehäuseteil (2a,2b) aus Metall besteht, wobei das jeweilige haubenartige Gehäuseteil (2a,2b) doppelwandig ausgebildet ist, wobei die beiden Wände (9,10) jeweils voneinander beabstandet sind und zwischen den beabstandeten Wänden (9,10) ein Hohlraum (6) ausgebildet ist, **dadurch gekennzeichnet, dass** im Hohlraum (6) zwischen den beabstandeten Wänden (9,10) ein Vakuum gebildet ist.

2. Elektrisches Back- oder Grillgerät nach Anspruch 1, **dadurch gekennzeichnet, dass** das elektrische Back- oder Grillgerät einen Standfuß aufweist, der eine Steuerelektronik zur Temperatursteuerung und gegebenenfalls Betriebsdauer und weiterer
betriebsrelevanter Parameter und eine optische Betriebsanzeige aufweist.

3. Elektrisches Back- oder Grillgerät nach einem der Ansprüche 1 oder 2, **dadurch gekennzeichnet, dass** das elektrische Back- oder Grillgerät eine kreisrunde, eine ovale oder eine eckige Grundform aufweist.

4. Elektrisches Back- oder Grillgerät nach einem der Ansprüche 1 bis 3, **dadurch gekennzeichnet, dass** die Gehäuseteile (2a,2b) mittels eines Scharniergelenks (5) verschwenkbar miteinander verbunden sind, wobei zudem Befestigungsmittel (7) oder Kabeldurchführungen (8) an den Gehäuseteilen (2a,2b) ausgebildet oder angeordnet sind, wobei die beiden Wände (9,10) der Doppelwand am oder nahe am Scharniergelenk (5) oder im Bereich der Befestigungsmittel oder der Kabeldurchführungen (8) aneinander anliegen (bei 11).

5. Elektrisches Back- oder Grillgerät nach einem der Ansprüche 1 bis 4, **dadurch gekennzeichnet, dass** das jeweilige haubenartige Gehäuseteil (2a,2b) aus Edelstahl besteht.

6. Elektrisches Back- oder Grillgerät nach einem der Ansprüche 1 bis 5, **dadurch gekennzeichnet, dass** die erste Wand (9) der Doppelwand oder die zweite Wand (10) der Doppelwand oder beide Wände (9,10) der Doppelwand an Ihrer dem Hohlraum (6) zugewandten Oberfläche eine Hitzeschutzbeschichtung, beispielsweise eine Thermofolie, aufweisen.

## Claims

1. An electric cooking or grilling device, such as a contact grill or a waffle iron (1), at least including a housing (2) and an electric heater (3) disposed in the housing (2) with a contact surface (4) or two electrically heatable contact surfaces (4) pivoting into a parallel, approached position, one hood-like housing portion (2a, 2b) each covering or surrounding the respective rear of the heatable contact surface (4) and the heater (3) arranged there, each hood-like housing portion (2a, 2b) being made of metal, the respective hood-like housing portion (2a, 2b) being formed double-walled, the two walls (9, 10) being spaced to each other, and between the spaced walls (9, 10), a cavity (6) being formed, **characterized by that** in the cavity (6) between the spaced walls (9, 10), a vacuum is formed.

2. The electric cooking or grilling device of claim 1, **characterized by that** the electric cooking or grilling device comprises a base section that includes control electronics for temperature control and, if applicable, operating time and further relevant parameters and a visual operation display part.

3. The electric cooking or grilling device of one of claims 1 or 2, **characterized by that** the electric cooking or grilling device has a circular, an oval, or a polygonal basic shape.

4. The electric cooking or grilling device of one of claims 1 to 3, **characterized by that** the housing portions (2a, 2b) are pivotally connected by means of a hinge joint (5), with fixing means (7) or cable entries (8) being formed or disposed at the housing portions (2a, 2b), the two walls (9, 10) of the double-wall resting against each other at or close to the hinge joint (5) or in the area of the fixing means or of the cable entries (8) (at 11) .

5. The electric cooking or grilling device of one of claims 1 to 4, **characterized by that** the respective hood-like housing portion (2a, 2b) is made of stainless steel.

6. The electric cooking or grilling device of one of claims 1 to 5, **characterized by that** the first wall (9) of the double-wall or the second wall (10) of the double-wall or both walls (9, 10) of the double-wall comprise a heat protection coating, for instance a thermal film, at their surface facing the cavity (6).

## Revendications

1. Appareil électrique de cuisson ou de grillade, comme un contact grill ou un dispositif gaufrier (1), au moins comportant un boîtier (2) et un dispositif de chauffage électrique (3) disposé dans le boîtier (2) avec une surface de contact (4) ou deux surfaces de contact (4) pouvant être chauffées électriquement et étant pivotantes dans une position parallèle, rapprochée, une partie de boîtier (2a, 2b) en forme de capot chacune recouvrant ou entourant l'arrière respectif de la surface de contact (4) pouvant être chauffée et le dispositif de chauffage (3) là disposé, chaque partie de boîtier (2a, 2b) en forme de capot étant en métal, la partie de boîtier (2a, 2b) respective en forme de capot étant réalisée à double paroi, les deux parois (9, 10) étant espacées l'une de l'autre, et entre les parois (9, 10) espacées, une cavité (6) étant réalisée, **caractérisé en ce que** dans la cavité (6) entre les parois (9, 10) espacées, un vide est formé.

2. Appareil électrique de cuisson ou de grillade selon la revendication 1, **caractérisé en ce que** l'appareil électrique de cuisson ou de grillade comprend une section de base qui comporte une électronique de commande pour la commande de la température et, le cas échéant, la durée de fonctionnement et d'autres paramètres pertinents et un témoin d'alimentation optique.

3. Appareil électrique de cuisson ou de grillade selon une des revendications 1 ou 2, **caractérisé en ce que** l'appareil électrique de cuisson ou de grillade a une forme de base circulaire, ovale ou polygonale.

4. Appareil électrique de cuisson ou de grillade selon une des revendications 1 à 3, **caractérisé en ce que** les parties de boîtier (2a, 2b) sont articulées au moyen d'une charnière d'articulation (5), avec des moyens de fixation (7) ou des passages de câble (8) étant formés ou disposés aux parties de boîtier (2a, 2b), les deux parois (9, 10) de la double paroi étant en appui l'une sur l'autre à ou près de la charnière d'articulation (5) ou dans la zone des moyens de fixation ou des passages de câble (8) (à 11).

5. Appareil électrique de cuisson ou de grillade selon une des revendications 1 à 4, **caractérisé en ce que** la partie de boîtier (2a, 2b) respective en forme de capot est en acier inoxydable.

6. Appareil électrique de cuisson ou de grillade selon une des revendications 1 à 5, **caractérisé en ce que** la première paroi (9) de la double paroi ou la deuxième paroi (10) de la double paroi ou toutes les deux parois (9, 10) de la double paroi comprennent une couche de protection thermique, par exemple une feuille thermique, à leur surface en vis-à-vis de la cavité (6).
